Europäisches Patentamt

(19) European Patent Office

Office européen des brevets

(11) EP 0 363 070 B1

(12) EUROPEAN PATENT SPECIFICATION

(45) Date of publication and mention
of the grant of the patent:
29.05.1996 Bulletin 1996/22

(51) Int. Cl.$^6$: C04B 35/56

(21) Application number: 89309844.2

(22) Date of filing: 27.09.1989

(54) **Highly densified bodies from polysilanes filled with silicon carbide powders**

Hoch verdichtete Körper aus mit Siliciumcarbidpulvern gefüllten Polysilanen

Corps ayant une densité élevée en polysilanes remplis de poudres en carbure de silicium

(84) Designated Contracting States:
BE DE FR GB NL

(30) Priority: 03.10.1988 US 265988

(43) Date of publication of application:
11.04.1990 Bulletin 1990/15

(73) Proprietor: DOW CORNING CORPORATION
Midland Michigan 48686-0994 (US)

(72) Inventors:
• Atwell, William Henry
Midland Michigan (US)
• Burns, Gary Thomas
Midland Michigan (US)
• Saha, Chandan Kumar
Midland Michigan 48640 (US)

(74) Representative: Laredo, Jack Joseph et al
Elkington and Fife
Prospect House
8 Pembroke Road
Sevenoaks, Kent TN13 1XR (GB)

(56) References cited:
EP-A- 0 148 277          EP-A- 0 212 485
DE-A- 2 236 078          FR-A- 2 317 039
US-A- 4 260 780

**Description**

This invention relates to the preparation of highly densified ceramic bodies by the pyrolysis of certain polysilanes filled with silicon carbide powders, certain metal-containing sintering aids and, optionally, polysilane curing agents. Such highly densified ceramic bodies can be prepared by either a pressureless sintering process or a hot press sintering process. This invention also relates to novel compositions comprising silicon carbide powder, a metal-containing sintering aid, a preceramic polysilane and, optionally, a polysilane curing agent. These compositions can be formed into desired shapes and then sintered to form ceramic, shaped bodies with high densities. One advantage of the present invention is that the green bodies have relatively high strengths and thus can be easily handled and, if desired, machined before sintering. Green bodies prepared from polysilanes containing curing agents may be cured prior to the sintering step thereby increasing the strength.

EP-A-0 148 277 describes a process for producing a sintered silicon carbide which comprises allowing an organosilicon polymer to be present on the surface of starting silicon carbide particles of 1 micrometer or less in size so as thereby to precipitate superfine silicon carbide particles produced from the organosilicon polymer onto the starting silicon carbide particles in a heating step prior to a sintering step. The organic silicon polymer is defined as an high molecular organic silicon compound whose skeleton is mainly composed of silicon and carbon, side-chains being decomposed almost entirely at a temperature of 800°C to form a nearly amorphous continuous structure mainly composed of Si-C bonds and which deposit extremely fine silicon carbide of less than 1,000 Angstroms in size at a temperature above 1,000°C., the amount of the organic silicon polymer added being from 1.5 to 30 parts by weight based on 100 parts by weight of the powdery silicon carbide. Compounds containing boron, aluminum and beryllium as well as carbonaceous materials are recommended as sintering promoting agents, in particular aluminium and aluminium compounds such as aluminium nitride, the amount of an aluminium compound to be added being preferably from 0.5 to 5 parts by weight calculated as aluminium based on 100 parts by weight of the total silicon carbide content in the resulting silicon carbide sintered product.

FR-A-2 317 039 describes shaped molded silicon carbide articles and a method for making them in which a mixture of silicon carbide powder with an organosilicon polymer used as a binder is molded together and thereafter heated. A variety of organosilicon polymers are described. The addition of oxides of aluminium, boron and silicon is indicated to be disadvantageous. Furthermore, although there is a teaching of preliminary condensation of the organic silicon polymer in the presence of a polymerization catalyst, for instance, the French Patent Publication does not teach the curing of a handleable green body formed by molding but on the contrary recommends that the cured organosilicon polymer be sintered and ground before mixing with uncured other organic silicon polymer to prepare a molded product which is thereafter itself sintered.

The present invention provides high density ceramic products from a pressureless sintering process using polysilanes as binders. Generally, high density ceramic materials will possess high strengths.

This invention relates to a composition of matter comprising in uniform admixture an organic silicon polymer (1), silicon carbide powder (2), and a metal-containing sintering aid (3), characterised in that:

(a) said organic silicon polymer (1) is a polysilane which contains units of general structure:
$[R_3Si]$, $[R_2Si]$ and $[RSi]$,
where each R is independently selected from the group consisting of hydrogen, alkyl radicals containing 1 to 20 carbon atoms, phenyl radicals and vinyl radicals, and is capable of being converted to a silicon carbide ceramic material with a yield of "stable ceramic char" produced by pyrolysis to a stage at which said ceramic char does not significantly decrease in weight upon exposure to further pyrolysis, said stable ceramic char being produced in an amount greater than 20 weight percent and containing "free carbon" in an amount (determined by pyrolysis of said polysilane under an inert atmosphere in the absence of silicon carbide powder or any sintering aid until said stable ceramic char is obtained) greater than 0.5 weight percent and not greater than 2.5 weight percent, based on the total weight of said silicon carbide powder and said "stable ceramic char", and
(b) said metal-containing sintering aid (3) is selected from iron, $Fe_3C$, boron, boron-containing compounds, aluminum, aluminum-containing compounds and metal oxides selected from thorium oxide, yttrium oxide, lanthanum oxide and cerium oxide, and is present in an amount corresponding to from 0.1 to 3.0 weight percent of the metal content thereof, based on the weight of said silicon carbide powder (2).

The invention also relates to a method of forming a handleable green body with a green strength of at least 3450 kPa (500 psi), which method comprises:

(a) preparing a composition of matter as defined just above, and
(b) forming said composition of matter into a desired shape under pressure at a temperature below 500°C, to yield said handleable green body.

The invention further relates to a method of preparing a sintered body of silicon carbide with a density above 2.6 g/cm$^3$, said method comprising:

(a) forming a handleable green body by a method as defined just above; and
(b) sintering said handleable green body in an inert atmosphere at a temperature greater than 1900°C, to yield said sintered body of silicon carbide.

The present invention is concerned with the preparation of highly densified sintered bodies from polysilanes filled with silicon carbide powder. The sintered bodies produced from the practice of this invention have densities greater than 80% of theoretical (i.e., densities greater than 2.6 g/cm$^3$). Such highly densified bodies are useful as light weight refractory ceramics. The theoretical density of silicon carbide is 3.21 g/cm$^3$.

The novel compositions of the present invention consist essentially of a polysilane filled with silicon carbide powder, a metal-containing sintering aid and, optionally, a polysilane curing agent. These novel compositions can be used to prepare handleable green bodies. By "handleable green bodies", we mean that these green bodies have sufficient strength to be handled or machined prior to sintering. The high green strength is one significant advantage of the present invention; the high green strength allows the green body to be further processed and shaped prior to the final sintering step. Generally, green strengths of 3450 kPa (500 psi) or more may be obtained in the practice of this invention.

The green bodies may be formed by conventional techniques known in the art. Such methods include pressure molding, uniaxial pressing, isopressing, extrusion, transfer molding, injection molding and the like. The formed green bodies may be further shaped by machining if desired. Once shaped, the green bodies are fired to an elevated temperature under an inert atmosphere to convert the green bodies into ceramic articles having densities greater than 80% of theoretical. It is preferred that the density of the ceramic article be greater than 85% of theoretical (2.7 g/cm$^3$). It is more preferred that the density be greater than 2.9 g/cm$^3$ (90% of theoretical). The sintering step may be carried out using either a pressureless sintering process or a hot press sintering process. When employing the compositions of this invention, either process will produce a highly densified ceramic article. The hot press sintering process will generally produce higher density ceramic articles. Therefore, if the maximum density is desired, a hot press sintering process would be preferred. Generally, however, the pressureless sintering process is preferred because of the simplified operations involved. The sintering or pyrolysis step is carried out under an inert atmosphere such as nitrogen or argon. The growth of alpha-SiC grains can be reduced by sintering under a nitrogen-containing atmosphere.

The sintering step to the final ceramic product is generally carried out at a temperature of 1900°C. or above. Lower temperatures can be used but the ceramic product may not possess the desired density. The preferred sintering temperature is 2000 to 2200°C. with 2075 to 2150°C. being most preferred.

The polysilanes useful in this invention are generally well known in the art. The polysilanes must be capable of being converted to silicon carbide ceramic materials with a significant ceramic char yield. The ceramic char yield should be greater than 20 weight percent. Naturally, there will be less shrinkage if the ceramic char yield is higher. Therefore, it is preferred that polysilanes with ceramic char yields greater than 40 weight percent be employed in the practice of this invention. The polysilane must also yield a ceramic char containing free carbon. Using a rule of mixtures, the ceramic char must contain more than 30 weight percent total carbon in order for free carbon to be present. Polysilanes which yield ceramic chars with more than 40 weight percent total carbon are preferred. A 40 weight percent carbon-containing ceramic material contains, based on a rule of mixtures, 86 weight percent SiC and 14 weight percent free carbon. Most preferred are polysilanes which yield ceramic chars with more than 50 weight percent total carbon; a 50 weight percent carbon-containing ceramic material contains, based on a rule of mixtures, 72 weight percent SiC and 28 weight percent free carbon. It is generally preferred that the ceramic char contain at least 10 weight percent free carbon. It is more preferred that the ceramic char contain at least 25 weight percent free carbon.

So long as the polysilane can be converted to a ceramic char with sufficient char yield and the derived ceramic char contains sufficient free carbon, the structure of the polysilane is not critical. The polysilane, therefore, contains units of general structure [R$_3$Si], [R$_2$Si] and [RSi] where each R is independently selected from the group consisting of hydrogen, alkyl radicals containing 1 to 20 carbon atoms, phenyl radicals and vinyl radicals. Generally, polysilanes which contain phenyl groups are preferred as such groups easily allow for the formation of ceramic chars with sufficient free carbon. Polysilanes which contain vinyl groups are also preferred since vinyl groups attached to silicon provide a mechanism whereby the polysilane can be cured prior to sintering. Preferred polysilanes contain 5 to 25 mole percent [Me$_2$Si] units and 75 to 95 mole percent [PhMeSi] units. Polysilanes useful in this invention may contain other silane units in addition to, or in place of, the silane units just mentioned. Examples of such silane units include [MeSi], [PhSi], [Visi], [PhMeSi], [MeHSi], [MeViSi], [Ph$_2$Si], [Me$_2$Si], [Me$_3$Si] and the like. Mixtures of polysilanes may also be employed. Generally, polysilanes where R is almost exclusively methyl are not suitable for use in this invention as there is insufficient free carbon in the resulting ceramic char.

The polysilanes of this invention can be prepared by techniques well known in the art. The actual method used to prepare the polysilanes is not critical. Suitable polysilanes may be prepared by the reaction of organohalosilanes with alkali metals as described in Noll, Chemistry and Technology of Silicones, 347-49 (translated 2d Ger. Ed., Academic Press, 1968). More specifically, suitable polysilanes may be prepared by the sodium metal reduction of organo-substituted chlorosilanes as described by West in U.S. Patent 4,260,780 and West et al. in 25 Polym. Preprints 4 (1984). Other suitable polysilanes can be prepared by the general procedures described in Baney et al., U.S. Patent No. 4,298,559.

In addition to the polysilane, other components in the compositions of this invention include silicon carbide powder, a metal-containing sintering aid, and, optionally, a polysilane curing agent. The silicon carbide powders useful in this invention are commercially available. Both alpha-SiC and beta-SiC powders, as well as mixtures, can be used. Generally, SiC powders with an average particle size of less than five micrometres (microns) are preferred; powders with an average particle size of less than one micrometre (micron) are more preferred.

Suitable metal-containing sintering aids include iron, $Fe_3C$, magnesium, $MgC_3$, lithium, $Li_2C_2$, beryllium, $Be_2C$, boron, boron-containing compounds, aluminum, aluminum-containing compounds and metal oxides such as thorium oxide, yttrium oxide, lanthanum oxide and cerium oxide. Many of these metal-containing sintering aids are described in Negita, "Effective Sintering Aids for Silicon Carbide Ceramics: Reactivities of Silicon Carbide with Various Additives," 69 J. Am. Ceram. Soc. C-308 (1986). Other metal-containing sintering aids suggested by Negita might also be effective in the practice of this invention. Generally, the sintering aid should be present at an amount equivalent to from 0.1 to 3.0 weight percent of the metal based on the weight of the silicon carbide powder. Preferred sintering aids are selected from the group consisting of boron, boron-containing compounds, aluminum and aluminum-containing compounds. Examples of boron-containing sintering aids include, for example, boron carbide, lithium borohydride, trivinylboron, triphenylboron, silicon hexaboride, $H_3BO_3$ and $B_2O_3$. Examples of aluminum-containing sintering aids include aluminum oxide, aluminum nitride and aluminum diboride. The most preferred sintering aids are boron and boron carbide. Mixtures of sintering aids may also be used.

The compositions of this invention may also contain polysilane curing agents. Such curing agents can be used to cure (via crosslinking the polysilanes) the shaped articles prior to sintering. Such cured articles generally have higher strengths than the noncured articles and, thus, can better withstand any handling or machining processes prior to sintering. Conventional polysilane curing agents which are useful in the present invention are well known in the art. Examples include organic peroxides such as dibenzoyl peroxide, bis-p-chlorobenzol peroxide, bis-2,4-dichlorobenzol peroxide, di-t-butyl peroxide, dicumyl peroxide, t-butyl perbenzoate and t-butyl peracetate; and platinum-containing curing agents such as platinum metal, $H_2PtCl_6$ and $((C_4H_9)_3P)_2PtCl_2$. Preferred polysilane curing agents include dicumyl peroxide and t-butyl perbenzoate. Other conventional polysilane curing agents known in the art may also be used. The polysilane curing agent is present in an effective amount, i.e. an amount sufficient to induce crosslinking in the polysilane. Therefore, the actual amount of the curing agent will depend on the activity of the actual agent used. Normally, however, the peroxide curing agent will be present at from 0.1 to 5.0 weight percent based on the weight of the polysilane with the preferred curing agent level being 2.0 weight percent. When the polysilane contains both vinyl groups and hydrogen atoms attached to silicon, platinum-containing curing agents can be used. For such platinum-containing curing agents, the level of the curing agent will normally be such that platinum is present at from 1 to 1000 ppm based on the weight of the polysilane with the preferred level at from 50 to 150 ppm platinum.

The preceramic polysilane is present in the compositions of the present invention at a level such that the free carbon value of the composition is greater than 0.5 weight percent based on the total weight of the silicon carbide powder and the char derived from the preceramic polysilane.

What is meant by "free carbon value of the mixture" in this invention is the amount of free or excess carbon derived from the polysilane during pyrolysis as expressed by a weight percentage based on the total weight of the silicon carbide powder and the char derived from the polysilane. The total amount of carbon in the ceramic char equals the amount of free or excess carbon plus the amount of carbon in the form of silicon carbide. The amount of free carbon derived from the polysilane is determined by pyrolysis of the polysilane, in the absence of any silicon carbide powder or sintering aid, to an elevated temperature under an inert atmosphere until a stable ceramic char is obtained. For purposes of this invention, a "stable ceramic char" is defined as the ceramic char produced at an elevated temperature which will not significantly decrease in weight upon further exposure at the elevated temperature. Normally, a stable ceramic char is produced upon pyrolysis at 1800°C. for 30 minutes. Other elevated temperatures can be used to form the stable ceramic char but the length of exposure to elevated temperature will need to be increased for temperatures below 1800°C. Both the ceramic yield and the carbon content of the stable ceramic char are then determined. Using a rule of mixtures, the amount of SiC and free carbon of the stable ceramic char can be calculated. The amount of free carbon normally is expressed as the weight of free carbon produced per gram of preceramic polysilane. Knowing the amount of free carbon produced by pyrolysis of the polysilane, one can determine how much polysilane is required to obtain a polysilane/silicon carbide mixture with the desired free carbon value. Naturally, if one is using the same or a very similar polysilane to prepare a sintered body, it is not required that the amount of free carbon produced per gram of polysilane be determined every time.

This procedure can perhaps be best illustrated by example. Assume a polysilane (100 g) which gives, upon pyrolysis to 1800°C., a char yield of 50 weight percent which contains 40 weight percent carbon and 60 weight percent silicon. Such a char contains 30 g (1.07 moles) silicon. Using a rule of mixtures, the char also contains 1.07 moles (12.8 g) of carbon in the form of SiC. Since the char contains 20 g carbon, the amount of free carbon in the char is 7.2 g (20 g minus 12.8 g). Thus, each gram of the preceramic polysilane yields 0.072 g free carbon. If a free carbon value for the mixture of 1.5 weight percent is desired, the following calculations can be performed. Let $\underline{X}$ equal the amount of polysilane required. The amount of char derived from the polysilane is $0.5\underline{X}$ (in grams, based on a 50% char yield); the amount of free carbon formed during the pyrolysis is $0.072\underline{X}$ (in grams). For a mixture containing 100 g of SiC powder, the equation $0.015 = (0.072\overline{X})/(100 + 0.5\overline{X})$ is obtained where $0.072\underline{X}$ is the amount of free carbon derived from the polysilane and $(100 + 0.5\underline{X})$ is the total weight of SiC powder and char derived from the polysilane. Solving the above equation for $\underline{X}$, it is found that 23.3 g of the polysilane will give the desired 1.5% free carbon value of the mixture. Using this procedure, the amount of polysilane required to prepare the compositions of this invention can be determined. This procedure avoids the costly and time consuming trial and error method which might otherwise be required.

The free carbon value of the mixture must be greater than 0.5 weight percent based on the total weight of the silicon carbide powder and the char derived from the polysilane. For free carbon values below 0.5 weight percent, the density of the sintered body will generally fall below 2.6 $g/cm^3$ (80% of theoretical). It is generally preferred that the free carbon value of the mixture be greater than 1.0% and that the density of the resulting sintered body be greater than 85% of theoretical. It is more preferred that the free carbon value of the mixture be between 1.0 and 2.5 weight percent with a range of 1.0 to 2.0 weight percent being even more preferred. The optimum density is generally obtained when the free carbon value of the mixture is from 1.0 to 2.0 weight percent.

Once the amount of polysilane required in the mixture has been determined, the various components are combined in a manner which ensures an uniform and intimate mixture. Such a mixture is required to avoid areas of varying density throughout the sintered product. Uniform and intimate mixtures can be prepared by using conventional blending techniques. Examples of such techniques include grinding the various powders in either the dry or the wet state. Generally preferred is wet grinding where the various powders are mixed and ground with organic solvents, the solvent is removed and then the resulting mixture is further ground. Other mixing and grinding methods will be apparent to those skilled in the art. The uniform and intimate mixture may then be formed into the desired shape. Preferably, the desired shape is formed under pressure using such methods as, for example, injection molding, extrusion, transfer molding and the like. Once formed the article may be further shaped by machining. Once the final shape has been obtained, the article is sintered in an inert atmosphere to a temperature of 1900°C. or above. The preferred sintering temperature is 2000 to 2200°C. with 2075 to 2150°C. being most preferred.

Although not wishing to be limited by theory, it is thought that the free carbon derived from the preceramic polysilane plays two different roles in the formation of highly densified sintered bodies. Firstly, it helps to remove oxygen present in the silicon carbide powder; and, secondly, it apparently acts as an additional sintering aid. Silicon carbide powders often contain so-called "free carbon." However, the "free carbon" present in the silicon carbide powder does not appear to be as active or effective as free carbon generated _in situ_ from the preceramic polysilane. It is not clear whether the free carbon produced _in situ_ is more active chemically or whether it is simply more evenly dispersed. In any event, when the free carbon value of the mixture (as defined earlier) is from 1.0 to 2.0 weight percent, sintered bodies with optimum densities are obtained.

So that those skilled in the art can better appreciate and understand the invention, the following examples are given. Unless otherwise indicated, all percentages are by weight. Throughout the specification "Me" represents a methyl group, "Ph" represents a phenyl group and "Vi" represents a vinyl group.

In the following examples, the analytical methods used were as follows:

Carbon analysis was done on a Control Equipment Corporation 240-XA Elemental Analyzer. Test bars were formed on a Carver laboratory press (Fred S. Carver Inc., Summit, N.J.). Pyrolysis was carried out in an Astro graphite element tube furnace Model 1000-3060-FPI2 equipped with an Eurotherm Controller/Programmer Model 822.

The SiC powder used was Ibiden UF silicon carbide which contains a mixture of 5 to 8% alpha-SiC and 92 to 95% beta-SiC. The boron used was amorphous boron powder from Cerac Inc. The polysilane was PSS-120 polysilastyrene from Shin Nisso Kako Co., Ltd., Tokyo, Japan. The sample of PSS-120 employed herein is described by the unit formula $[Me_2Si]_{0.091}[PhMeSi]_{0.909}$ wherein the Me/Ph molar ratio is 1.2/1.0.

Example - Sintered Bodies from Polysilastyrene

A -- Char Composition Calculations. A sample of the PSS-120 polysilastyrene under argon was heated to 1800°C. at 10°C./min and held at 1800°C. for two hours before cooling to room temperature. The sample had a mass retention of 22.1% and contained 51.7% carbon. The following calculations were made: 100 g of cured polymer gives 22.1 g of a ceramic char consisting of 51.7% carbon and 48.3% silicon (by difference). The char consists of 15.2 g SiC (68.8%) and 6.9 g carbon (31.2%). Therefore, each gram of polymer, after pyrolysis, gives 0.152 g SiC and 0.069 g free carbon.

B -- Test Bar Fabrication. Several polysilastyrene/SiC blends were prepared using the following procedure: Weighed samples of the polysilane, Ibiden Sic powder and boron powder were milled with about 150 mL toluene for thirty minutes in an attritor mill using 400 g SiC milling media under an inert atmosphere. The solvent was stripped off and the residue dried under vacuum. The dried powder was ground and passed through a 60 mesh sieve. The sieved powder was dry pressed into test bars (35x8x2 mm) in a tungsten carbide lined die in a Carver laboratory press at 103 MPa (15 ksi) under a nitrogen atmosphere. The test bars were sintered at 2150°C. under argon using the following temperature program: room temperature to 300°C. at 26.7°C./min, 300 to 700°C. at 25°C./min, 700 to 1350°C at 20°C./min, 1350°C for 30 minutes, 1350 to 2150°C. at 20°C./min and 2150°C. for 30 minutes. The density of the sintered test bars was determined. The following results were obtained.

| Test Bar | SiC (g) | PSS-120 (g) | Boron (g) | Free Carbon Value (%) | Density (g/cm$^3$) | Density (% of theoretical) |
|---|---|---|---|---|---|---|
| 1 | 39.330 | 3.05 | 0.197 | 0.53 | 2.73 | 85.0 |
| 2 | 39.10 | 4.09 | 0.196 | 0.70 | 2.73 | 85.0 |
| 3 | 38.77 | 5.59 | 0.194 | 0.96 | 2.94 | 91.6 |
| 4 | 38.23 | 7.63 | 0.192 | 1.32 | 2.82 | 87.9 |
| 5 | 37.76 | 10.18 | 0.189 | 1.75 | 2.89 | 90.0 |
| 6 | 37.20 | 12.72 | 0.186 | 2.19 | 2.88 | 89.7 |
| 7 | 36.64 | 15.27 | 0.183 | 2.63 | 2.70 | 84.1 |

## Claims

1. A composition of matter comprising in uniform admixture an organic silicon polymer (1), silicon carbide powder (2), and a metal-containing sintering aid (3), characterised in that:

    (a) said organic silicon polymer (1) is a polysilane which contains units of general structure:
        $[R_3Si]$, $[R_2Si]$ and $[RSi]$,
    where each R is independently selected from the group consisting of hydrogen, alkyl radicals containing 1 to 20 carbon atoms, phenyl radicals and vinyl radicals, and is capable of being converted to a silicon carbide ceramic material with a yield of "stable ceramic char" produced by pyrolysis to a stage at which said ceramic char does not significantly decrease in weight upon exposure to further pyrolysis, said stable ceramic char being produced in an amount greater than 20 weight percent and containing "free carbon" in an amount (determined by pyrolysis of said polysilane under an inert atmosphere in the absence of silicon carbide powder or any sintering aid until said stable ceramic char is obtained) greater than 0.5 weight percent and not greater than 2.5 weight percent, based on the total weight of said silicon carbide powder and said "stable ceramic char", and
    (b) said metal-containing sintering aid (3) is selected from iron, $Fe_3C$, boron, boron-containing compounds, aluminum, aluminum-containing compounds and metal oxides selected from thorium oxide, yttrium oxide, lanthanum oxide and cerium oxide, and is present in an amount corresponding to from 0.1 to 3.0 weight percent of the metal content thereof, based on the weight of said silicon carbide powder (2).

2. A composition of matter according to Claim 1, wherein the polysilane contains 5 to 25 mole percent $[Me_2Si]$ units and 75 to 95 mole percent $[PhMeSi]$ units.

3. A method of forming a handleable green body with a green strength of at least 3450 kPa (500 psi), which method comprises:

    (a) preparing a composition of matter according to Claim 1, and
    (b) forming said composition of matter into a desired shape under pressure at a temperature below 500°C, to yield said handleable green body.

4. A method of preparing a sintered body of silicon carbide with a density above 2.6 g/cm$^3$, said method comprising:

    (a) forming a handleable green body by a method according to Claim 3; and

(b) sintering said handleable green body in an inert atmosphere at a temperature greater than 1900°C, to yield said sintered body of silicon carbide.

5. A method as claimed in Claim 4, wherein said metal-containing sintering aid is selected from the group consisting of boron, boron-containing compounds, aluminum and aluminum-containing compounds.

6. A method as claimed in any of Claims 3 to 5, wherein said composition of matter also contains a polysilane curing agent in an effective amount to cure said polysilane.

7. A method as claimed in Claim 6, wherein the handleable green body is cured prior to the sintering step.

**Patentansprüche**

1. Zusammensetzung, enthaltend in gleichmäßiger Mischung ein organisches Siliconpolymer (1), Siliziumcarbidpulver (2) und ein metallhaltiges Sinterhilfsmittel (3),
   **dadurch gekennzeichnet, daß**

   (a) das organische Siliconpolymer (1) ein Polysilan ist, enthaltend Einheiten der allgemeinen Formel [$R_3Si$], [$R_2Si$] und [RSi], in denen jedes R unabhängig ausgewählt aus der Gruppe bestehend aus Wasserstoff, Alkylgruppen mit 1 bis 20 Kohlenstoffatomen, Phenylresten und Vinylresten, und es in keramisches Siliziumcarbid umwandelbar ist mit einer Ausbeute an "stabilem keramischem Koks", hergestellt durch Pyrolyse bis zu einem Zustand, bei dem sich durch weitere Pyrolyse das Gewicht an keramischem Koks nicht mehr wesentlich verringert, wobei der stabile keramische Koks in einer Menge von mehr als 20 Gew.-% gebildet wird und "freien Kohlenstoff" in einer Menge (bestimmt durch Pyrolyse des Polysilans in inerter Atmosphäre in Abwesenheit von Siliciumcarbidpulver oder jeglichem Sinterhilfsmittel, bis der stabile keramische Koks gebildet ist) von mehr als 0,5 Gew.-% und nicht mehr als 2,5 Gew.-%, bezogen auf Gesamtgewicht des Siliziumcarbidpulvers und des "stabilen keramischen Koks", enthält, und
   (b) das metallhaltige Sinterhilfsmittel (3) aus Eisen, $Fe_3C$, Bor, borhaltigen Verbindungen, Aluminium, aluminiumhaltigen Verbindungen und Metalloxiden, ausgewählt aus Thoroxid, Yttriumoxid, Lanthanoxid und Ceroxid, ausgewählt ist und in einer Menge vorhanden ist, die 0,1 bis 3,0 Gew.-% des Metallgehalts derselben, bezogen auf Gewicht des Siliziumcarbidpulvers (2), entspricht.

2. Zusammensetzung nach Anspruch 1,
   **dadurch gekennzeichnet,**
   daß das Polysilan 5 bis 25 Mol-% [$Me_2Si$]-Einheiten und 75 bis 95 Mol-% [PhMeSi]-Einheiten enthält.

3. Verfahren zum Ausbilden eines handhabbaren Grünkörpers mit einer Grünfestigkeit von mindestens 3450 kPa (500 psi) durch

   (a) Herstellen einer Zusammensetzung nach Anspruch 1 und
   (b) Ausformen der Zusammensetzung in die gewünschte Form unter Druck bei einer Temperatur unter 500°C, um den handhabbaren Grünkörper zu erzeugen.

4. Verfahren zum Herstellen eines gesinterten Körpers aus Siliziumcarbid mit einer Dichte über 2,6 g/cm$^3$ durch

   (a) Ausbilden eines handhabbaren Grünkörpers durch ein Verfahren nach Anspruch 3 und
   (b) Sintern des handhabbaren Grünkörpers in einer inerten Atmosphäre bei einer Temperatur über 1900°C, um einen gesinterten Körper aus Siliciumcarbid zu erzeugen.

5. Verfahren nach Anspruch 4,
   **dadurch gekennzeichnet,**
   daß das metallhaltige Sinterhilfsmittel aus der aus Bor, borhaltigen Verbindungen, Aluminium und aluminiumhaltigen Verbindungen bestehenden Gruppe ausgewählt ist.

6. Verfahren nach einem der vorstehenden Ansprüche 3 bis 5,
   **dadurch gekennzeichnet,**
   daß die Zusammensetzung auch ein Polysilanhärtungsmittel in einer wirksamen Menge zum Härten des Polysilans enthält.

**7.** Verfahren nach Anspruch 6,
**dadurch gekennzeichnet**,
daß der handhabbare Grünkörper vor dem Sinterschritt gehärtet wird.

**Revendications**

**1.** Une composition de matière comprenant, en mélange homogène, un polymère organosilicié (1), une poudre de carbure de silicium (2) et un adjuvant de frittage contenant un métal (3), caractérisée en ce que :

(a) ledit polymère organosilicié (1) est un polysilane qui contient des motifs de structure générale :
$[R_3Si]$, $[R_2Si]$ et $[RSi]$,
où chaque R est choisi indépendamment dans le groupe formé par l'hydrogène, les radicaux alkyles contenant 1 à 20 atomes de carbone, les radicaux phényle et les radicaux vinyle, et est capable d'être converti en une matière céramique à base de carbure de silicium en donnant un "produit de carbonisation céramique stable" produit par pyrolyse jusqu'à un point auquel le poids dudit produit de carbonisation céramique ne diminue pas notablement par exposition à une pyrolyse supplémentaire, ledit produit de carbonisation céramique stable étant produit en une quantité supérieure à 20 % en poids et contenant du "carbone libre" en une quantité (déterminée par pyrolyse dudit polysilane dans une atmosphère inerte en l'absence de poudre de carbure de silicium ou de tout adjuvant de frittage jusqu'à obtention dudit produit de carbonisation céramique stable) supérieure à 0,5 pour cent en poids et non supérieure à 2,5 pour cent en poids, par rapport au poids total de ladite poudre de carbure de silicium et dudit "produit de carbonisation céramique stable", et
(b) ledit adjuvant de frittage contenant un métal (3) est choisi parmi le fer, $Fe_3C$, le bore, les composés contenant du bore, l'aluminium, les composés contenant de l'aluminium et les oxydes métalliques choisis parmi l'oxyde de thorium, l'oxyde d'yttrium, l'oxyde de lanthane et l'oxyde de cérium, et est présent en une quantité correspondant à 0,1 à 3,0 pour cent en poids du métal qu'il contient par rapport au poids de ladite poudre de carbure de silicium (2).

**2.** Une composition de matière selon la revendication 1, dans laquelle le polysilane contient 5 à 25 moles pour cent de motifs $[Me_2Si]$ et 75 à 95 moles pour cent de motifs $[PhMeSi]$.

**3.** Un procédé de formation d'un corps vert pouvant être manipulé ayant une résistance mécanique à l'état vert d'au moins 3450 kPa, lequel procédé consiste à :

(a) préparer une composition de matière selon la revendication 1, et
(b) façonner ladite composition de matière en une forme souhaitée sous pression à une température inférieure à 500°C, pour obtenir ledit corps vert pouvant être manipulé.

**4.** Un procédé de fabrication d'un corps fritté en carbure de silicium ayant une masse volumique supérieure à 2,6 g/cm$^3$, ledit procédé consistant à :

(a) former un corps vert pouvant être manipulé, par un procédé selon la revendication 3 ; et
(b) fritter ledit corps vert pouvant être manipulé, dans une atmosphère inerte à une température supérieure à 1900°C pour obtenir ledit corps fritté en carbure de silicium.

**5.** Un procédé tel que revendiqué dans la revendication 4, dans lequel ledit adjuvant de frittage contenant un métal est choisi dans le groupe formé par le bore, les composés contenant du bore, l'aluminium et les composés contenant de l'aluminium.

**6.** Un procédé tel que revendiqué dans l'une quelconque des revendications 3 à 5, dans lequel ladite composition de matière contient également un agent durcisseur de polysilane en une quantité efficace pour durcir ledit polysilane.

**7.** Un procédé tel que revendiqué dans la revendication 6, dans lequel le corps vert pouvant être manipulé est durci avant l'étape de frittage.